# EUROPÄISCHE PATENTANMELDUNG

(11) **EP 1 442 967 A2**
(43) Veröffentlichungstag der Anmeldung: **04.08.2004**
(21) Anmeldenummer: 03101363.4
(22) Anmeldetag: 15.05.2003
(51) Int. Cl.: B62D 29/00, B62D 65/00, B62D 27/02

(54) **Verfahren zum Verbinden von zwei Fahrzeugrahmenteilen**

(30) Priorität: 31.01.2003 EP 31001985
(71) Anmelder: Ford Global Technologies, LLC, A subsidary of Ford Motor Company, Dearborn, MI 48126 (US)
(72) Erfinder: Sweeney, Kevin Eugene, Dr., Arlington, VA 22203-3425 (US); Porschen, Peter, 50170, Kerpen (DE); Stadtler, Arnold, 50935, Koeln (DE); Baumann, Matthias, 52070, Aachen (DE)
(74) Vertreter: Drömer, Hans-Carsten, Dr.-Ing.

(57) **Zusammenfassung**

Die Erfindung bezieht sich auf ein Verfahren zum Verbinden zweier Fahrzeugrahmenteile 11 für Fahrzeuge aller Art, insb. für Kraftfahrzeuge, wobei die Fahrzeugrahmenteile 11 vorzugsweise zum Aufbau einer Fahrzeugtragrahmenanordnung 10 mit wesentlichen Bestandteilen aus extrudierten Profilen 12 ausgebildet sind. Das Verbinden der einzelnen Fahrzeugrahmenteile 11 erfolgt dabei mehrstufig, derart, daß in einem Verfahrensschritt eine Fixierung der zu verbindenden Fahrzeugrahmenteile 11 zueinander erfolgt und daß in einem weiteren Verfahrensschritt eine strukturelle Fügung der zu verbindenden Fahrzeugrahmenteile 11 erfolgt. Es ist dabei erfindungsgemäß vorgesehen, daß das Verbinden der einzelnen Fahrzeugrahmenteile 11 in der Weise mehrstufig erfolgt, daß in einem Verfahrensschritt eine Fixierung der zu verbindenden Fahrzeugrahmenteile 11 zueinander durch elektromagnetisches Fügen erfolgt und in einem weiteren Verfahrensschritt eine strukturelle Fügung der einzelnen zu verbindenden Fahrzeugrahmenteile 11 erfolgt.

## Beschreibung

Die Erfindung bezieht sich auf ein Verfahren zum Verbinden zweier Fahrzeugrahmenteile für Fahrzeuge aller Art, insb. für Kraftfahrzeuge, wobei die Fahrzeugrahmenteile vorzugsweise zum Aufbau einer Fahrzeugtragrahmenanordnung mit wesentlichen Bestandteilen aus vorzugsweise extrudierten Profilen ausgebildet sind, wobei das Verbinden der einzelnen Fahrzeugrahmenteile mehrstufig erfolgt, derart, daß in einem Verfahrensschritt eine Fixierung der zu verbindenden Fahrzeugrahmenteile zueinander erfolgt und daß in einem weiteren Verfahrensschritt eine strukturelle Fügung der zu verbindenden Fahrzeugrahmenteile erfolgt.

Aus dem Stand der Technik sind verschiedene Verfahren zum Verbinden zweier Fahrzeugrahmenteile für Fahrzeuge aller Art, insb. für Kraftfahrzeuge, bekannt. Bei den bekannten Verfahren bestehen dabei die Teile insb. der Fahrzeugkarosserie zumeist aus geformtem Stahl, wobei die einzelnen Komponenten meist über Schweißverbindungen, Bolzen, Schrauben od. dgl. oder auch z.B. über Klebeverbindungen zusammengehalten werden. Bei den bekannten Verfahren sowie bei der Herstellung z.B. von Fahrzeugen allgemein ergab sich durch äußere Einflüsse wie Umwelteinflüsse od. dgl. das Erfordernis, immer leichtere Fahrzeuge herstellen zu müssen, wodurch die Hersteller auf eine Verwendung anderer Materialien wie Aluminium oder Magnesium angewiesen waren. Dadurch ergab sich für die Produktion von Karosseriekörpern z.B. für Fahrzeuge die Tragrahmen-Technik (Spaceframe- Technik), bei der wesentliche Teile des Karosseriekörpers aus extrudierten Profilen vorzugsweise im wesentlichen aus Aluminium gebildet werden.

Es steht dabei insb. das Problem der Verbindung der extrudierten Profile aus Aluminium oder einem anderen leichtgewichtigen Material im Vordergrund, bei den bekannten Lösungen werden zumeist Schweißverbindungen oder Schraubenverbindungen aber auch Klebeverbindungen verwendet. Dabei ergibt sich bei dem Bestreben nach mehr Modularität das Erfordernis, vorgefertigte Karosserieteile oder Module ohne eine Erhöhung der Temperatur in einem Kaltverbindungsprozeß verbinden zu müssen. Dazu bietet sich insbesondere auch ein struktureller Fügevorgang durch eine Verklebung an. Eine Verbindung der extrudierten Profile durch ein Verkleben ist in mehrerer Hinsicht vorteilhaft, so bildet die Verklebung als Verbindungsart eine einheitliche Lösung für die zu verbindenden Teile in einer sauberen und kalten, d.h. ohne Wärme produzierenden, Weise, weiterhin ergibt sich durch das Vorsehen einer Verklebung an der Verbindungsstelle eine verbesserte Steifigkeit, Festigkeit, sowie verbesserte Alterungseigenschaften und verbesserte Crash- Eigenschaften im Vergleich zu anderen Arten der Verbindung.

Es ist grundsätzlich aus dem Stand der Technik bekannt, bei der Montage von Karosseriekörpern auch einzelne Komponenten durch eine Verklebung zu verbinden. Es sei dazu beispielhaft auf die DE 196 06 779 A1 verwiesen. Diese Druckschrift zeigt ein Verfahren zur Montage und Farbgebung eines Kraftfahrzeuges mit selbsttragender Karosserie, daß dadurch gekennzeichnet ist, daß das gesamte Kraftfahrzeug einschließlich der Karosserie aus einzelnen Modulen zusammengesetzt wird, die unabhängig voneinander so vorgefertigt werden, daß sie mit allen Ausstattungsmerkmalen voll funktionsfähig und den Erfordernissen entsprechend lackiert für eine Endmontage zur Verfügung stehen und daß die Module in einer nach annähernd beliebigen spezifischen Kriterien optimierten Montagereihenfolge endmontiert werden, wobei ausschließlich Verbindungen zwischen einzelnen Modulen herzustellen, nicht jedoch Montage- oder sonstige Arbeiten am Modul selbst auszuführen sind. Es können dabei bei der Modul-Endmontage die Verbindungen zwischen einzelnen Elementen der selbsttragenden Karosserie durch Verrasten, Verschrauben, Vernieten, Kleben, Klemmen oder Clinschen hergestellt werden. Durch dieses Verfahren soll insbesondere die Flexibilität bei der Gestaltung der Montagevorgänge erhöht werden, um die Kosten für die Fahrzeugherstellung zu reduzieren.

Bei Herstellung einer strukturellen Fügung durch eine Verklebung besteht bei der Zuführung von Klebemittel in dem Fahrzeug- Montage- Prozeß das Problem, daß das Klebemittel am Anfang eine sehr geringe Festigkeit aufweist und seine maximale Festigkeit erst nach einer beträchtlichen Aushärtungszeit erlangt. Dies macht die sofortige Handhabung der zu verbindenden Teile schwierig. Aus diesem Grunde wird die Verbindungsart des Verklebens häufig mit anderen Verbindungsarten kombiniert, wobei hier insbesondere solche Verbindungsarten mit zusätzlichen Befestigungselementen zu nennen sind. Es erfolgt also in diesem Falle in einem Verfahrensschritt eine Fixierung der zu verbindenden Fahrzeugrahmenteile zueinander über diese zusätzlichen Befestigungselemente und eine strukturelle Fügung der zu verbindenden Fahrzeugrahmenteile über eine Verklebung. Nachteilig ist bei diesem bekannten Verfahren insbesondere, daß trotz des Vorsehens einer Verklebung noch zusätzliche z.B. mechanische Befestigungselemente verwendet werden müssen, um die zu verbindenden Teile sofort z.B. für eine Weiterverarbeitung handhaben zu können.

Aus dem Stand der Technik sind ferner auch andere Verbindungstechniken insbesondere in Verbindung mit Hilfs- oder Tragrahmenkonstruktionen für Fahrzeuge bekannt, wie z.B. Magnetumformung oder elektromagnetisches Verbinden. Hierzu sei beispielhaft auf die DE 199 20 800 A1, die US 5 966 813 A1 und die US 6 255 631 B1 verwiesen. Bei den hier beschriebenen Verfahren wird jedoch jeweils zur Herstellung der Verbindung im wesentlichen ausschließlich eine strukturelle Fügung ohne eine Verwendung eines sehr preisgünstigen Verbindungsmittels wie z.B. einer Verklebung durchgeführt, außerdem ist es bei den beschriebenen Verfahren insb. hinsichtlich der bestehenden Anforderungen nach mehr Modularität erforderlich, diese bei einer nur geringen Erhöhung der Temperatur in einem Kaltverbindungsprozeß hinsichtlich der Verbindung vorgefertigter Karosserieteile oder Module zu verbessern.

Ausgehend von diesen bekannten Verfahren zum Verbinden zweier Fahrzeugrahmenteile für Fahrzeuge aller Art, insb. für Kraftfahrzeuge, liegt der Erfindung die Aufgabe zugrunde, die bekannten Verfahren unter Beibehaltung der bisherigen Vorteile in der Weise zu verbessern bzw. weiterzuentwickeln, daß beim Verbindungsvorgang nach dem Verfahrensschritt der Fixierung der zu verbindenden Fahrzeugrahmenteile zueinander eine sofortige Handhabung der zu verbindenden Teile z.B. für eine Weiterverarbeitung ermöglicht wird ohne zusätzliche Halte- oder Befestigungselemente, wie z.B. solche mechanischer Bauart, verwenden zu müssen, wobei davon unbeeinflußt trotzdem z.B. eine Aushärtung eines Klebemittels beim strukturellen Fügen möglich sein soll. Es soll dabei insbesondere ermöglicht werden, vorgefertigte Karosserieteile oder Module für eine Fahrzeugrahmenanordnung ohne eine deutliche Erhöhung der Temperatur in einem Kaltverbindungsprozeß auf einfache und funktionsgerechte Weise miteinander zu verbinden. Das gewünschte Verfahren soll dabei einfach und wirtschaftlich durchführbar sein.

Diese Aufgabe wird erfindungsgemäß dadurch gelöst, daß das Verbinden der einzelnen Fahrzeugrahmenteile in der Weise mehrstufig erfolgt, daß in einem Verfahrensschritt eine Fixierung der zu verbindenden Fahrzeugrahmenteile zueinander durch elektromagnetisches Fügen erfolgt und in einem weiteren Verfahrensschritt eine strukturelle Fügung der einzelnen zu verbindenden Fahrzeugrahmenteile erfolgt. Auf diese Weise wird erstmalig mit einfachen Mitteln die Möglichkeit geschaffen, die bereits teilweise oder vollständig bearbeiteten und/oder ausgerüsteten Fahrzeugrahmenteile in einem Kaltverbindungsprozeß einfach und funktionsgerecht miteinander zu verbinden, wobei beim Verbindungsvorgang nach dem Verfahrensschritt der Fixierung der zu verbindenden Fahrzeugrahmenteile zueinander durch elektromagnetisches Fügen eine sofortige Handhabung der zu verbindenden Teile z.B. für eine Weiterverarbeitung ermöglicht wird ohne zusätzliche Halte- oder Befestigungselemente, wie z.B. solche mechanischer Bauart, verwenden zu müssen; es ist dabei davon unbeeinflußt trotzdem z.B. eine Aushärtung eines Klebemittels beim strukturellen Fügen möglich. Das erfindungsgemäße Verfahren bietet eine besonders vorteilhafte Kombination der Verfahrensschritte der Fixierung der zu verbindenden Fahrzeugrahmenteile und des Verfahrensschrittes der strukturellen Fügung der zu verbindenden Fahrzeugrahmenteile, wobei, da das erfindungsgemäße Verfahren im wesentlichen bei Raumtemperatur stattfindet, nicht kontaktbehaftet ist und sich insb. bei dreidimensionalen Bauteilevariationen sehr gut anwenden läßt, es besonders gut für die Verbindung von vorgefertigten Fahrzeugrahmenteilen zum Aufbau von Fahrzeugtragrahmenanordnungen einsetzbar ist. Das erfindungsgemäße Verfahren ist dabei einfach und funktionsgerecht durchführbar und außerdem vielseitig anwendbar. Dabei ist es nicht auf extrudierte Profile beschränkt, sondern es können auch alle anderen geeigneten Profile gefügt werden.

Bei der bevorzugten Ausführungsform der vorliegenden Erfindung erfolgt das Verbinden der einzelnen Fahrzeugrahmenteile in der Weise mehrstufig, daß in einem Verfahrensschritt eine Fixierung der zu verbindenden Fahrzeugrahmenteile zueinander durch elektromagnetisches Fügen erfolgt und in einem weiteren Verfahrensschritt eine strukturelle Fügung der einzelnen zu verbindenden Fahrzeugrahmenteile durch eine Verklebung erfolgt. Die Kombination der Fixierung der zu verbindenden Fahrzeugrahmenteile zueinander durch elektromagnetisches Fügen mit der strukturellen Fügung der einzelnen zu verbindenden Fahrzeugrahmenteile durch eine Verklebung ist in besonders vorteilhafter Weise anwendbar, weil eben gerade bei der Verklebung zu Anfang nur eine sehr geringe Festigkeit gegeben ist und die maximale Festigkeit sich erst nach einer längeren Aushärtungszeit einstellt und dies durch die Fixierung der zu verbindenden Fahrzeugrahmenteile zueinander durch elektromagnetisches Fügen ausgeglichen wird. Durch das elektromagnetische Fügen wird dabei eine sofortige Handhabung der zu verbindenden Teile z.B. für eine Weiterverarbeitung ermöglicht. Durch die Einfachheit dieses Verfahrens und die Tatsache, daß keine zusätzlichen Halte- oder Befestigungselemente, wie z.B. solche mechanischer Bauart, verwendet werden müssen, bietet diese Ausführungsform eine besonders gute Möglichkeit zur Verbindung von vorgefertigten Fahrzeugrahmenteilen zum Aufbau von Fahrzeugtragrahmenanordnungen.

Alternativ oder ergänzend ist nach weiteren Ausgestaltungsmerkmalen der vorliegenden Erfindung vorgesehen, daß das Verbinden der einzelnen Fahrzeugrahmenteile in der Weise mehrstufig erfolgt, daß in einem Verfahrensschritt eine Fixierung der zu verbindenden Fahrzeugrahmenteile zueinander durch elektromagnetisches Fügen erfolgt und in einem weiteren Verfahrensschritt eine strukturelle Fügung der einzelnen zu verbindenden Fahrzeugrahmenteile durch eine Verschweißung, eine Vernietung, eine Verschraubung, eine Verrastung, eine Verklemmung und/oder eine Clinschung erfolgt. Es lassen sich diese verschiedenen Möglichkeiten in einfacher Weise in Abhängigkeit des jeweiligen Anwendungsfalles in der gewünschten Form kombinieren.

Nach einem weiteren Ausgestaltungsmerkmal der vorliegenden Erfindung ist vorgesehen, daß das Verbinden der einzelnen Fahrzeugrahmenteile in der Weise mehrstufig erfolgt, daß eine Fixierung der zu verbindenden Fahrzeugrahmenteile zueinander durch elektromagnetisches Fügen vor dem strukturellen Fügen der zu verbindenden Fahrzeugrahmenteile erfolgt. Man wird diese Variante in den Fällen wählen, in denen bevorzugt z.B. eine Verklebung oder eine Verschweißung erst nach der Fixierung der zu verbindenden Bauteile erfolgen soll.

Bei einer anderen Ausführungsform der vorliegenden Erfindung ist vorgesehen, daß das Verbinden der einzelnen Fahrzeugrahmenteile in der Weise mehrstufig erfolgt, daß der Verfahrensschritt des strukturellen Fügens der zu verbindenden Fahrzeugrahmenteile bereits vor der Fixierung der zu verbindenden Fahrzeugrahmenteile durch elektromagnetisches Fügen erfolgt. Diese Ausführungsform ist insbesondere bei der Auswahl des Verklebens oder Verschweißens für eine strukturelle Fügung vorteilhaft, da hier sofort nach der Fixierung der zu verbindenden Fahrzeugrahmenteile zueinander eine Handhabung der zu verbindenden Teile z.B. für eine Weiterverarbeitung ermöglicht wird, wobei trotzdem z.B. eine Aushärtung eines zuvor eingebrachten Klebemittels oder einer Verschweißung erfolgen kann.

Nach einem weiteren bevorzugten Ausgestaltungsmerkmal der vorliegenden Erfindung empfiehlt es sich, daß die einzelnen Fahrzeugrahmenteile vor ihrem mehrstufigen Verbinden bereits teilweise oder vollständig bearbeitet und/oder ausgerüstet werden. Es ist dies der bevorzugte Anwendungsfall der vorliegenden Erfindung, es soll diese aber nicht auf diesen Anwendungsfall beschränkt sein. Es empfiehlt sich dabei, daß durch das mehrstufige Verbinden eine Verbindung der einzelnen Fahrzeugrahmenteile aus extrudierten Aluminium- Profilen erzeugt wird. Es läßt sich dieses Verfahren bei der Herstellung von Aluminiumtragrahmenstrukturen besonders vorteilhaft anwenden, wobei insb. die hohe elektrische Leitfähigkeit des Aluminiums in diesem Fall vorteilhaft ist, wobei mit steigender Leitfähigkeit des Materials das Verfahren um so effektiver wird.

Nach einem weiteren bevorzugten Ausgestaltungsmerkmal der vorliegenden Erfindung empfiehlt es sich, daß die mehrstufige Verbindung der einzelnen Fahrzeugrahmenteile unter Verwendung eines zusätzlichen, beim elektromagnetischen Fügen expandierenden Verbindungselementes erfolgt. Dabei empfiehlt es sich, daß die mehrstufige Verbindung der einzelnen Fahrzeugrahmenteile unter Verwendung eines als verankertes Dornelement ausgebildeten, beim elektromagnetischen Fügen expandierenden zusätzlichen Verbindungselementes erfolgt. Durch diese Unterstützung des Verbindens der beiden Komponenten durch das als verankertes Dornelement ausgebildete zusätzliche Verbindungselement wird eine vorherige Bearbeitung der zu verbindenden Komponenten, u.a. z.B. der A- oder B- Säule, im wesentlichen überflüssig, weiterhin ergeben sich Erleichterungen bzgl. der Ausführung der Toleranzen.

Es empfiehlt sich nach einem weiteren Ausgestaltungsmerkmal der vorliegenden Erfindung, daß die A- und/oder B- Säule einer Fahrzeugkarosserie durch mehrstufiges Verbinden an dem Fahrgestellrahmen des Fahrzeuges befestigt wird. Für diese Verbindungsart ist das erfindungsgemäße Verfahren besonders gut geeignet. Dabei empfiehlt es sich, daß das zusätzliche Verbindungselement beim elektromagnetischen Fügen sowohl in der A- und/oder B- Säu le als auch in dem Fahrgestellrahmen expandiert. Es kann dabei bei einer ersten Ausführungsform das Expandieren des zusätzlichen Verbindungselementes beim elektromagnetischen Fügen sowohl in der A- und/oder B- Säule als auch in dem Fahrgestellrahmen sequentiell erfolgen; bei einer anderen, alternativen Ausführungsform kann das Expandieren des zusätzlichen Verbindungselementes beim elektromagnetischen Fügen sowohl in der A- und/oder B- Säule als auch in dem Fahrgestellrahmen gleichzeitig erfolgen.

Es empfiehlt sich nach einem weiteren Ausgestaltungsmerkmal der vorliegenden Erfindung, daß die A- und/oder B- Säule mit einem solchen Querschnitt versehen wird, der zur leichten Aufnahme des zusätzlichen Verbindungselementes vor dem Expandieren beim elektromagnetischen Fügen geeignet ist. Dabei wird zweckmäßig der Fahrgestellrahmen im Verbindungsbereich mit wenigstens einer Ausnehmung versehen, die zur Aufnahme des zusätzlichen Verbindungselementes vor dem Expandieren beim elektromagnetischen Fügen geeignet ist. Da der Vorgang des elektromagnetischen Fügens relativ unempfindlich ist, ist ein derartiges Positionieren des zusätzlichen Verbindungselementes in den Profilen der zu verbindenden Komponenten unkritisch. Es empfiehlt sich dabei außerdem, daß der Fahrgestellrahmen im wesentlichen im Verbindungsbereich mit einer Anzahl im wesentlichen horizontal verlaufender Wände versehen wird, so daß die Verbindung eine hohe Festigkeit erhält. Das verbundene Teilsystem wird dadurch stabil genug, um sofort für weitere Montageschritte gehandhabt zu werden.

Nach einem weiteren Ausgestaltungsmerkmal der vorliegenden Erfindung kann das zusätzliche Verbindungselement vor dem elektromagnetischen Fügen zusammen mit der A- und/oder B- Säule in den Fahrgestellrahmen eingesetzt werden. Es erhält dadurch die Verbindungsstelle eine größere Steifigkeit. Dabei empfiehlt es sich, daß die A- und/oder B- Säule zuerst mit einem Klebemittel versehen wird, anschließend in dem Fahrgestellrahmen positioniert wird und danach das zusätzliche Verbindungselement sowohl in der A- und/oder B- Säule als auch in dem Fahrgestellrahmen expandiert.

Es empfiehlt sich nach einem weiteren Ausgestaltungsmerkmal der vorliegenden Erfindung, daß als zusätzliches Verbindungselement eine extrudierte Hülse, bevorzugt aus Aluminium, vorgesehen wird, die beim elektromagnetischen Fügen in dem jeweiligen Profil expandiert. Eine solche Hülse läßt sich einfach in die zu verbindenden Komponenten einsetzen, wobei sich nach dem Expandieren der Hülse in dem Profil gleichzeitig eine gute Torsionsfestigkeit ergibt. Es ist dabei bei einer abgewandelten Ausführungsform vorgesehen, daß als zusätzliches Verbindungselement eine extrudierte, doppelseitige Hülse mit einem mittigen Anschlag, bevorzugt aus Aluminium, vorgesehen wird, die bei m elektromagnetischen Fügen in dem jeweiligen Profil expandiert.

Nach einem weiteren Ausgestaltungsmerkmal der vorliegenden Erfindung empfiehlt es sich, daß durch die Steganordnung in der A- und/oder B- Säule ein Expandieren des zusätzlichen Verbindungselementes an bestimmten Umfangsbereichen verhindert wird, wodurch sich ein Ineinandergreifen von A- und/oder B- Säule und zusätzlichem Verbindungselement ergibt.

Es empfiehlt sich außerdem, daß der Fahrgestellrahmen derart vorgefertigt wird, daß das zusätzliche Verbindungselement und ggfs. die A- und/oder B- Säule von oben her gesehen angebracht werden können, wobei bevorzugt zunächst das zusätzliche Verbindungselement in den Fahrgestellrahmen eingesetzt wird und danach die A - und/oder B- Säule auf das zusätzliche Verbindungselement aufgesetzt wird.

Nach einem weiteren Ausgestaltungsmerkmal der vorliegenden Erfindung wird das Betätigungselement für das elektromagnetische Fügen in das zusätzliche Verbindungselement zu dessen Expandieren in der A- und/oder B- Säule und in dem Fahrgestellrahmen eingeführt. Dabei können bei einer Ausführungsform beide Verbindungen, A- und/oder B- Säule mit zusätzlichem Verbindungselement bzw.

Fahrgestellrahmen mit zusätzlichem Verbindungselement, in derselben Bearbeitungsvorrichtung gleichzeitig erzeugt werden. Bei einer anderen Ausführungsform können beide Verbindungen, A- und/oder B- Säule mit zusätzlichem Verbindungselement bzw. Fahrgestellrahmen mit zusätzlichem Verbindungselement, separat in derselben Bearbeitungsvorrichtung oder in unterschiedlichen Bearbeitungsvorrichtungen erzeugt werden.

Nach einem weiteren Merkmal der vorliegenden Erfindung ist vorgesehen, daß die A-Säule einer Fahrzeugkarosserie durch mehrstufiges Verbinden an dem in einer Instrumententafel integrierten Querträger eines Fahrzeuges befestigt wird. Es empfiehlt sich dabei, daß die A- Säule einer Fahrzeugkarosserie zuerst mit der Instrumententafel über ein Klebemittel verbunden wird und anschließend das zusätzliche Verbindungselement durch die A- Säule hindurch in die Instrumententafel eingeführt und dann beim elektromagnetischen Fügen expandiert wird. Dabei ergibt sich eine saubere und schnelle Verbindung mit einer hohen Steifigkeit ohne die Verwendung von Befestigungsmitteln wie Schrauben od. dgl., die im übrigen auch klapperfrei ist.

Nach einem weiteren Merkmal der vorliegenden Erfindung ist vorgesehen, daß die einzelnen zu verbindenden Fahrzeugrahmenteile vor dem mehrstufige Verbinden fertig lackiert werden, d.h. es erübrigt sich nach dem Verbinden eine diesbezügliche Nachbehandlung.

In entsprechender Weise ist nach einem anderen Merkmal der vorliegenden Erfindung vorgesehen, daß die einzelnen zu verbindenden Fahrzeugrahmenteile vor dem mehrstufigen Verbinden fertig mit Verkleidungselementen versehen werden, so daß sich auch hier nach dem Verbinden eine diesbezügliche Nachbehandlung erübrigt.

Es empfiehlt sich nach einem weiteren Ausgestaltungsmerkmal der vorliegenden Erfindung, daß das strukturelle Fügen der einzelnen Fahrzeugrahmenteile durch Verklebung unter Zuführung eines Einkomponenten- Klebemittels erfolgt. Alternativ oder ergänzend kann nach einem letzten Ausgestaltungsmerkmal der vorliegenden Erfindung das strukturelle Fügen der einzelnen Fahrzeugrahmenteile durch Verklebung unter Zuführung eines Mehrkomponenten- Klebemittels erfolgen.

Die Erfindung ist in den Figuren der Zeichnung in mehreren Ausführungsbeispielen dargestellt. Es zeigen:
- Fig. 1: eine schematische Teil- Schnittansicht durch eine nach dem erfindungsgemäßen Verfahren hergestellte Verbindungsstelle A- Säule - Fahrgestellrahmen mit einem zusätzlichen Verbindungselement,
- Fig. 2: eine schematische, explosionsartige Darstellung einer Fahrzeugtragrahmenanordnung vor dem Zusammenfügen nach dem erfindungsgemäßen Verfahren,
- Fig. 3: eine schematische, perspektivische Darstellung einer Fahrzeugtragrahmenanordnung nach dem Zusammenfügen nach dem erfindungsgemäßen Verfahren,
- Fig.4: eine schematische, perspektivische Teilansicht der nach dem erfindungsgemäßen Verfahren hergestellten Verbindungsstelle A-Säule - Fahrgestellrahmen mit zusätzlichem Verbindungselement,
- Fig. 5: eine schematische Draufsicht auf die Verbindungsstelle A- Säule-Fahrgestellrahmen mit zusätzlichem Verbindungselement gemäß Fig. 4,
- Fig. 6: eine schematische Schnittansicht durch einen Fahrgestellrahmen mit einer ersten Querschnittsform mit angedeutetem zusätzlichen Verbindungselement,
- Fig. 7: eine schematische Schnittansicht durch einen Fahrgestellrahmen mit einer zweiten Querschnittsform mit angedeutetem zusätzlichen Verbindungselement,
- Fig. 8: eine schematische Schnittansicht durch einen Fahrgestellrahmen mit einer dritten Querschnittsform mit angedeutetem zusätzlichen Verbindungselement,
- Fig.9: eine schematische, perspektivische Teilansicht einer nach dem erfindungsgemäßen Verfahren herzustellenden Verbindungsstelle A-Säule - Querträger in Instrumententafel mit angedeutetem einzusetzenden zusätzlichen Verbindungselement in einer ersten Ausführungsform und angedeutetem Betätigungselement für das elektromagnetische Fügen,
- Fig. 10: eine schematische Teil- Schnittansicht durch eine nach dem erfindungsgemäßen Verfahren hergestellte Verbindungsstelle A- Säule - Fahrgestellrahmen mit einem zusätzlichen Verbindungselement und zusätzlichem, zwischen der A- Säule und dem Fahrgestellrahmen eingebrachtem Klebemittel,
- Fig. 11: eine schematische, perspektivische Teilansicht einer nach dem erfindungsgemäßen Verfahren herzustellenden Verbindungsstelle A-Säule - Querträger in Instrumententafel mit angedeutetem einzusetzenden zusätzlichen Verbindungselement in einer zweiten Ausführungsform und angedeutetem Betätigungselement für das elektromagnetische Fügen.

Die nach dem erfindungsgemäßen Verfahren aufgebaute Fahrzeugtragrahmenanordnung ist generell mit 10 bezeichnet. Das erfindungsgemäße Verfahren dient dabei zum Verbinden zweier mit 11 bezeichneter Fahrzeugrahmenteile für Fahrzeuge aller Art, insb. für Kraftfahrzeuge. Dabei sind die Fahrzeugrahmenteile 11 vorzugsweise zum Aufbau einer Fahrzeugtragrahmenanordnung 10 mit wesentlichen Bestandteilen aus extrudierten Profilen 12 ausgebildet.

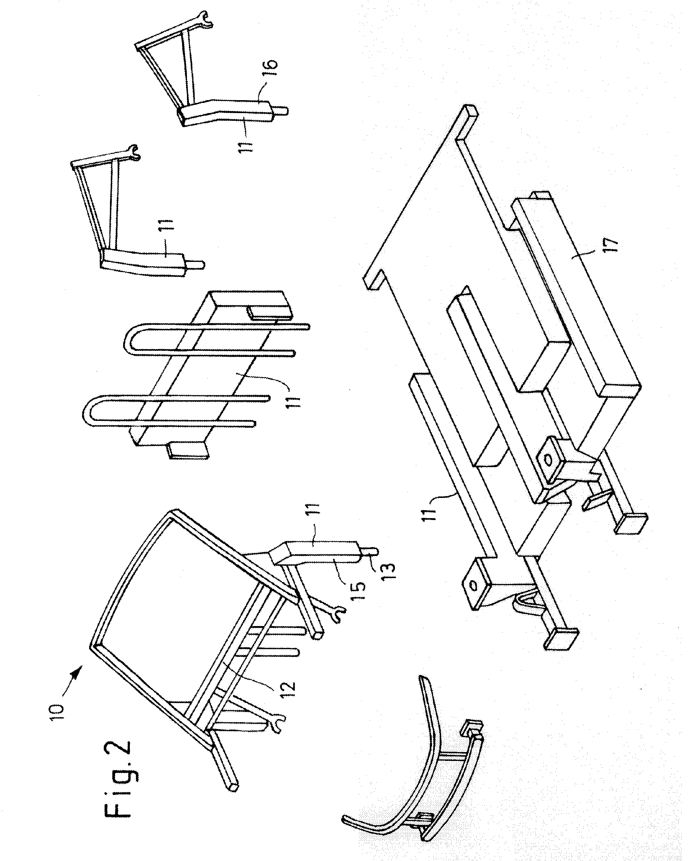

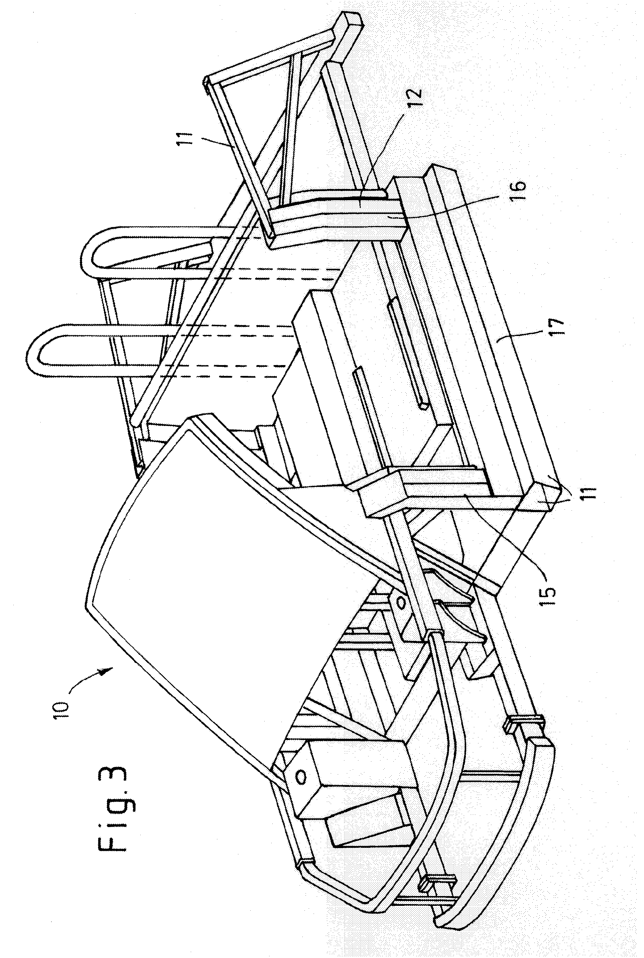

Bei dem erfindungsgemäßen Verfahren erfolgt das Verbinden der einzelnen Fahrzeugrahmenteile 11 mehrstufig und zwar derart, daß in einem Verfahrensschritt eine Fixierung der zu verbindenden Fahrzeugrahmenteile 11 zueinander erfolgt und daß in einem weiteren Verfahrensschritt eine strukturelle Fügung der zu verbindenden Fahrzeugrahmenteile 11 erfolgt. Es ist dabei erfindungsgemäß vorgesehen, daß das Verbinden der einzelnen Fahrzeugrahmenteile 11 in der Weise mehrstufig erfolgt, daß in einem Verfahrensschritt eine Fixierung der zu verbindenden Fahrzeugrahmenteile 11 zueinander durch elektromagnetisches Fügen erfolgt und in einem weiteren Verfahrensschritt eine strukturelle Fügung der einzelnen zu verbindenden Fahrzeugrahmenteile 11 erfolgt. Es ist dazu in der Fig. 2 der Zeichnung eine Fahrzeugtragrahmenanordnung 10 vor dem Zusammenfügen nach dem erfindungsgemäßen Verfahren perspektivisch dargestellt, in der Fig. 3 der Zeichnung ist entsprechend eine Fahrzeugtragrahmenanordnung 10 nach dem Zusammenfügen nach dem erfindungsgemäßen Verfahren perspektivisch dargestellt.

Mit dem erfindungsgemäßen Verfahren wird die Möglichkeit geschaffen, z.B. bereits teilweise oder vollständig bearbeitete und/oder ausgerüstete Fahrzeugrahmenteile 11 in einem Kaltverbindungsprozeß einfach und funktionsgerecht miteinander zu verbinden, wobei beim Verbindungsvorgang nach dem Verfahrensschritt der Fixierung der zu verbindenden Fahrzeugrahmenteile 11 zueinander durch elektromagnetisches Fügen eine sofortige Handhabung der zu verbindenden Teile z.B. für eine Weiterverarbeitung ermöglicht wird ohne zusätzliche Halte- oder Befestigungselemente, wie z.B. solche mechanischer Bauart, verwenden zu müssen; es ist dabei davon unbeeinflußt trotzdem z.B. eine Aushärtung eines Klebemittels beim strukturellen Fügen möglich.

Das erfindungsgemäße Verfahren bietet eine besonders vorteilhafte Kombination der Verfahrensschritte der Fixierung der zu verbindenden Fahrzeugrahmenteile 11 und des Verfahrensschrittes der strukturellen Fügung der zu verbindenden Fahrzeugrahmenteile 11, es läßt sich dabei, da das erfindungsgemäße Verfahren im wesentlichen bei Raumtemperatur stattfindet, nicht kontaktbehaftet ist und sich insb. bei dreidimensionalen Bauteilevariationen sehr gut anwenden läßt, dieses besonders gut für die Verbindung von vorgefertigten Fahrzeugrahmenteilen 11 zum Aufbau von Fahrzeugtragrahmenanordnungen 10 einsetzen. Das erfindungsgemäße Verfahren ist dabei auch einfach und funktionsgerecht durchführbar und außerdem vielseitig anwendbar.

Bezüglich des strukturellen Fügevorganges sind dabei unterschiedliche Ausführungsformen vorgesehen; bei der bevorzugten und in den Figuren der Zeichnung dargestellten Ausführungsform der vorliegenden Erfindung erfolgt das Verbinden der einzelnen Fahrzeugrahmenteile 11 in der Weise mehrstufig, daß in einem Verfahrensschritt eine Fixierung der zu verbindenden Fahrzeugrahmenteile 11 zueinander durch elektromagnetisches Fügen erfolgt und in einem weiteren Verfahrensschritt eine strukturelle Fügung der einzelnen zu verbindenden Fahrzeugrahmenteile 11 durch eine Verklebung erfolgt. Die Kombination der Fixierung der zu verbindenden Fahrzeugrahmenteile 11 zueinander durch elektromagnetisches Fügen mit der strukturellen Fügung der einzelnen zu verbindenden Fahrzeugrahmenteile 11 durch eine Verklebung ist in besonders vorteilhafter Weise anwendbar, weil eben gerade bei der Verklebung zu Anfang nur eine sehr geringe Festigkeit gegeben ist und die maximale Festigkeit sich erst nach einer längeren Aushärtungszeit einstellt und dies durch die Fixierung der zu verbindenden Fahrzeugrahmenteile 11 zueinander durch elektromagnetisches Fügen ausgeglichen wird. Durch das elektromagnetische Fügen wird dabei eine sofortige Handhabung der zu verbindenden Teile z.B. für eine Weiterverarbeitung ermöglicht. Durch die Einfachheit dieses Verfahrens und die Tatsache, daß keine zusätzlichen Halte- oder Befestigungselemente, wie z.B. solche mechanischer Bauart, verwendet werden müssen, bietet diese Ausführungsform eine besonders gute Möglichkeit zur Verbindung von vorgefertigten Fahrzeugrahmenteilen 11 zum Aufbau von Fahrzeugtragrahmenanordnungen 10.

Alternativ oder ergänzend zu dieser Ausführungsform ist nach weiteren Ausgestaltungsmerkmalen der vorliegenden Erfindung vorgesehen, daß das Verbinden der einzelnen Fahrzeugrahmenteile 11 in der Weise mehrstufig erfolgt, daß in einem Verfahrensschritt eine Fixierung der zu verbindenden Fahrzeugrahmenteile 11 zueinander durch elektromagnetisches Fügen erfolgt und in einem weiteren Verfahrensschritt eine strukturelle Fügung der einzelnen zu verbindenden Fahrzeugrahmenteile 11 durch eine Verschweißung, eine Vernietung, eine Verschraubung, eine Verrastung, eine Verklemmung und/oder eine Clinschung erfolgt. Es lassen sich diese verschiedenen Möglichkeiten auch in Abhängigkeit des jeweiligen Anwendungsfalles in der gewünschten Form beliebig kombinieren.

Für die Fälle, in denen bevorzugt z.B. eine Verklebung oder eine Verschweißung erst nach der Fixierung der zu verbindenden Bauteile erfolgen soll, erfolgt bei einer Ausgestaltungsform des erfindungsgemäßen Verfahrens das Verbinden der einzelnen Fahrzeugrahmenteile 11 in der Weise mehrstufig, daß eine Fixierung der zu verbindenden Fahrzeugrahmenteile 11 zueinander durch elektromagnetisches Fügen vor dem strukturellen Fügen der zu verbindenden Fahrzeugrahmenteile 11 erfolgt.

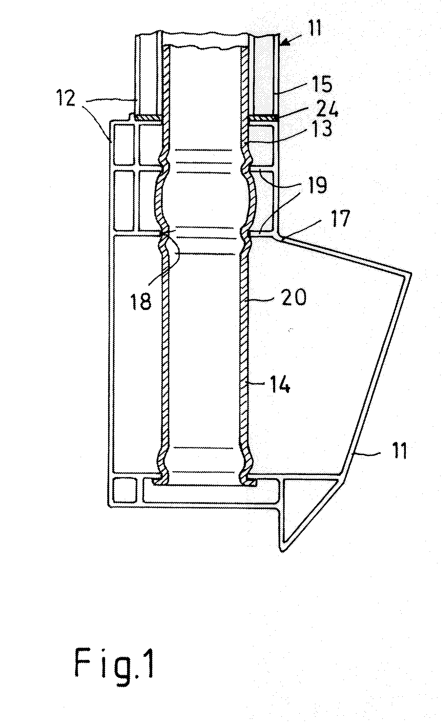

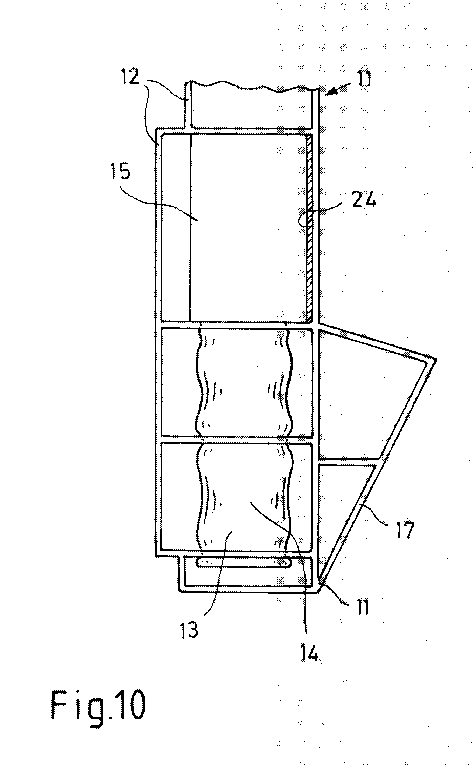

Bei einer davon abweichenden Ausführungsform des erfindungsgemäßen Verfahrens ist vorgesehen, daß das Verbinden der einzelnen Fahrzeugrahmenteile 11 in der Weise mehrstufig erfolgt, daß der Verfahrensschritt des strukturellen Fügens der zu verbindenden Fahrzeugrahmenteile 11 bereits vor der Fixierung der zu verbindenden Fahrzeugrahmenteile 11 durch elektromagnetisches Fügen erfolgt. Diese Ausführungsform ist insbesondere bei der Auswahl des Verklebens oder Verschweißens für eine strukturelle Fügung vorteilhaft, da hier sofort nach der Fixierung der zu verbindenden Fahrzeugrahmenteile 11 zueinander eine Handhabung der zu verbindenden Teile z.B. für eine Weiterverarbeitung ermöglicht wird, wobei trotzdem z.B. eine Aushärtung eines zuvor eingebrachten Klebemittels oder einer Verschweißung erfolgen kann. In den Figuren der Zeichnung ist dabei, siehe insbesondere die Fig. 1 und 10, diese Ausführungsform mit der vorherigen strukturellen Fügung für den Fall des Verklebens für die Verbindung A- Säule 15 - Fahrgestellrahmen 17 dargestellt.

Es ist dazu in der Fig. 1 bzw. der Fig. 10 der Zeichnung ein zwischen der A- Säule 15 und dem Fahrgestellrahmen 17 befindliches, mit 24 bezeichnetes Klebemittel dargestellt, das z.B. vor der Erzeugung der Verbindung dieser beiden Fahrzeugrahmenteile 11 durch elektromagnetisches Fügen auf die A- Säule 15 aufgebracht werden kann. Die A- Säule wird dann in dem Fahrgestellrahmen 17 positioniert, danach wird dann das zusätzliche Verbindungselement 13 beim elektromagnetischen Fügen expandiert.

Bei der bevorzugten Ausführungsform des erfindungsgemäßen Verfahrens werden die einzelnen Fahrzeugrahmenteile 11 vor ihrem mehrstufigen Verbinden bereits teilweise oder vollständig bearbeitet und/oder ausgerüstet. Es ist dies der bevorzugte Anwendungsfall der vorliegenden Erfindung. Es wird dabei in den dargestellten Ausführungsbeispielen durch das mehrstufige Verbinden eine Verbindung der einzelnen Fahrzeugrahmenteile 11 aus extrudierten Aluminium- Profilen erzeugt. Es läßt sich dieses Verfahren bei der Herstellung von Aluminiumtragrahmenstrukturen besonders vorteilhaft anwenden, wobei insb. die hohe elektrische Leitfähigkeit des Aluminiums in diesem Fall vorteilhaft ist, wobei mit steigender Leitfähigkeit des Materials das Verfahren um so effektiver wird.

Weiterhin ist bei den in den Fig. der Zeichnung beispielhaft dargestellten Verbindungsstellen vorgesehen, daß die mehrstufige Verbindung der einzelnen Fahrzeugrahmenteile 11 unter Verwendung eines zusätzlichen, beim elektromagnetischen Fügen expandierenden Verbindungselementes 13 erfolgt. Dies kann in der Weise erfolgen, daß die mehrstufige Verbindung der einzelnen Fahrzeugrahmenteile 11 unter Verwendung eines als verankertes Dornelement 14 ausgebildeten, beim elektromagnetischen Fügen expandierenden zusätzlichen Verbindungselementes 13 erfolgt. Ein solches als verankertes Dornelement 14 ausgebildetes zusätzliches Verbindungselement 13 ist z.B. in der Fig. 1 gezeigt, es wird hierauf nachfolgend näher eingegangen. Durch diese Unterstützung des Verbindens der beiden Komponenten durch das als verankertes Dornelement 14 ausgebildete, beim elektromagnetischen Fügen expandierende zusätzliche Verbindungselement 13 wird eine vorherige Bearbeitung der zu verbindenden Komponenten, u.a. z.B. der A- oder B- Säule 15,16, im wesentlichen überflüssig, weiterhin ergeben sich Erleichterungen bzgl. der Ausführung der Toleranzen. Als Ausgangspunkt für dieses zusätzliche Verbindungselement 13 können ebenso wie für die zu verbindenden Profile 12 auf Länge geschnittene extrudierte Al- Profile verwendet werden.

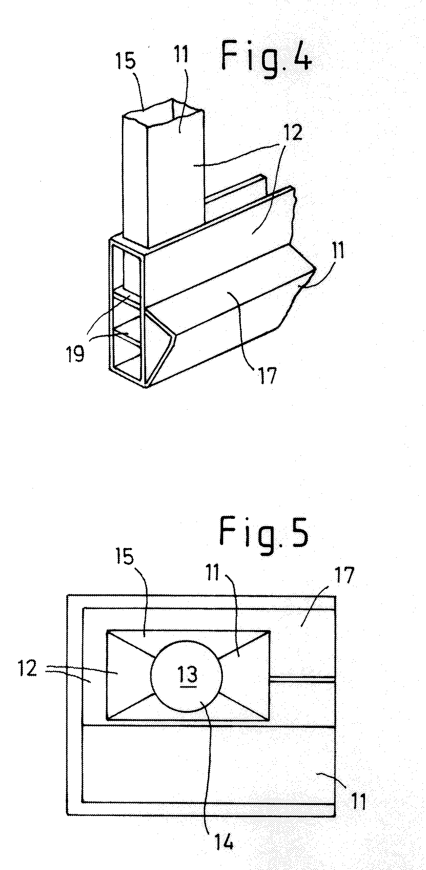

Bei der in der Fig. 1 dargestellten, nach dem erfindungsgemäßen Verfahren hergestellten Verbindungsstelle wird die A- Säule 15 einer Fahrzeugkarosserie durch mehrstufiges Verbinden an dem Fahrgestellrahmen 17 des Fahrzeuges befestigt, und zwar, wie erwähnt, unter Verwendung eines als verankertes Dornelement 14 ausgebildeten zusätzlichen Verbindungselementes 13. In analoger Weise könnte z.B. auch die B- Säule 16 einer Fahrzeugkarosserie durch mehrstufiges Verbinden an dem Fahrgestellrahmen 17 des Fahrzeuges befestigt werden, es ist dies in den Fig. 3 und 4 der Zeichnung schematisch angedeutet. Bei dieser Ausführungsform expandiert das zusätzliche Verbindungselement 13 beim elektromagnetischen Fügen sowohl in der A- und/oder B- Säule 15,16 als auch in dem Fahrgestellrahmen 17. Es kann dabei bei einer ersten Ausführungsform das Expandieren des zusätzlichen Verbindungselementes 13 beim elektromagnetischen Fügen sowohl in der A- und/oder B- Säule als auch in dem Fahrgestellrahmen 17 sequentiell erfolgen, bei einer anderen Ausführungsform kann das Expandieren des zusätzlichen Verbindungselementes 13 beim elektromagnetischen Fügen sowohl in der A- und/oder B- Säule als auch in dem Fahrgestellrahmen 17 gleichzeitig erfolgen.

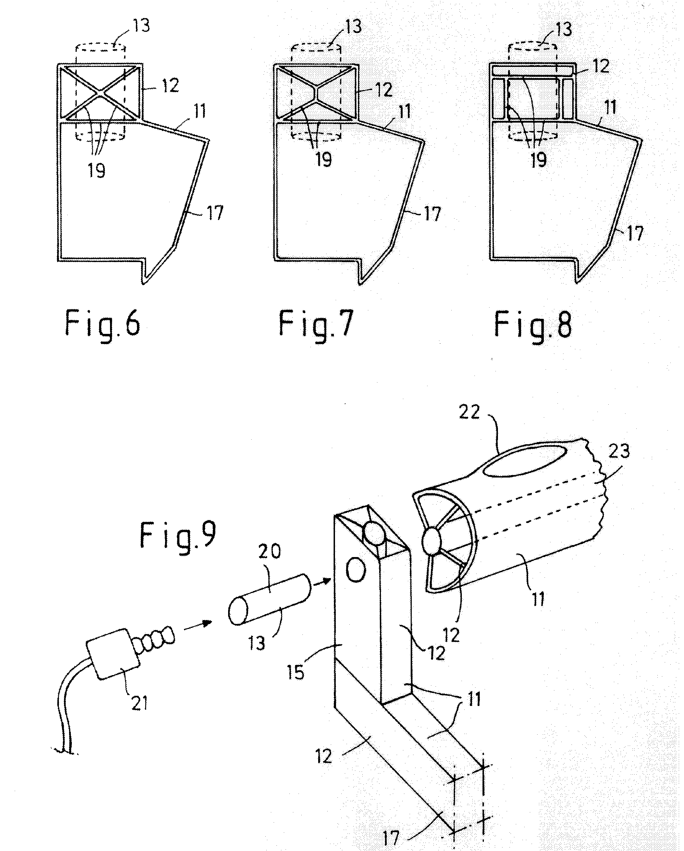

Bei der in der Fig. 1 dargestellten, nach dem erfindungsgemäßen Verfahren hergestellten Verbindungsstelle zwischen A- Säule 15 und Fahrgestellrahmen 17 wird, siehe dazu auch die Fig. 4 und 5 der Zeichnung, die A- Säule 15 mit einem solchen Querschnitt versehen, der zur leichten Aufnahme des zusätzlichen Verbindungselementes 13 vor dem Expandieren beim elektromagnetischen Fügen geeignet ist. Gleiches kann z.B. auch wieder für die B- Säule 16 gelten. Dabei wird außerdem, siehe wieder die Fig. 1, der Fahrgestellrahmen 17 im Verbindungsbereich mit wenigstens einer Ausnehmung 18 versehen, die zur Aufnahme des zusätzlichen Verbindungselementes 13 vor dem Expandieren beim elektromagnetischen Fügen geeignet ist. Da der Vorgang des elektromagnetischen Fügens relativ unempfindlich ist, ist ein derartiges Positionieren des zusätzlichen Verbindungselementes 13 in den Profilen der zu verbindenden Komponenten unkritisch. Bei der gezeigten Verbindungsstelle wird weiterhin der Fahrgestellrahmen 17 im wesentlichen im Verbindungsbereich mit einer Anzahl im wesentlichen horizontal verlaufender Wände 19 versehen, so daß die Verbindung eine hohe Festigkeit erhält. Das verbundene Teilsystem wird dadurch stabil genug, um sofort für weitere Montageschritte gehandhabt zu werden. Es kann dabei zur Optimierung der Verbindungseigenschaften wie Torsionsfestigkeit, Steifigkeit etc. der Querschnitt des Fahrgestellrahmens 17 in diesem Bereich unterschiedlich ausgebildet sein, siehe die Darstellungen in den Fig. 6, 7 und 8 der Zeichnung. Es weist der Fahrgestellrahmen 17 in der Fig. 6 in diesem Bereich einen kreuzartigen Querschnitt auf, in der Fig. 7 einen annähernd kreuzartigen Querschnitt mit kurzem Mittelsteg und in Fig. 8 einen Querschnitt mit mehreren Rechtecken unterschiedlicher Größe.

Bei der in den Fig. 4 und 5 dargestellten, nach dem erfindungsgemäßen Verfahren hergestellten Verbindungsstelle zwischen A- Säule 15 und Fahrgestellrahmen 17 wird das zusätzliche Verbindungselement 13 vor dem elektromagnetischen Fügen zusammen mit der A- Säule 15 in den Fahrgestellrahmen 17 eingesetzt. Dadurch erhält die Verbindungsstelle eine größere Steifigkeit. Es wird dabei die A- Säule 15 zuerst mit einem Klebemittel 24 versehen, anschließend in dem Fahrgestellrahmen 17 positioniert und danach das zusätzliche Verbindungselement 13 sowohl in der A-Säule 15 als auch in dem Fahrgestellrahmen 17 expandiert, siehe dazu auch die Darstellungen in den Fig. 1 und 10 der Zeichnung.

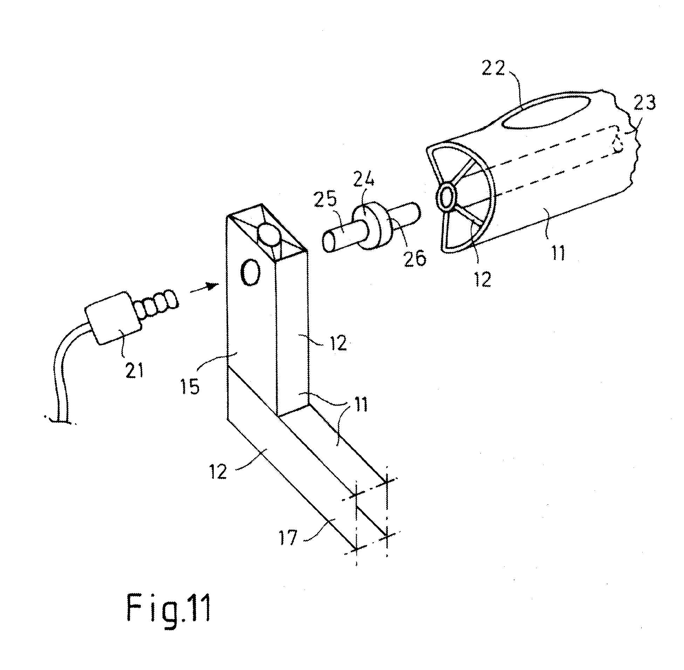

Bei den in den Fig. dargestellten Verbindungsstellen wird als zusätzliches Verbindungselement 13 eine extrudierte Hülse 20, bevorzugt aus Aluminium, vorgesehen, die beim elektromagnetischen Fügen in dem jeweiligen Profil expandiert, siehe dazu auch die Ausführungsform gemäß der Fig. 9 der Zeichnung. Solch eine Hülse 20 läßt sich einfach in die zu verbindenden Komponenten einsetzen, wobei sich nach dem Expandieren der Hülse 20 in dem Profil 12 gleichzeitig eine gute Torsionsfestigkeit ergibt. Bei einer davon abgewandelten Ausführungsform ist vorgesehen, daß als zusätzliches Verbindungselement 13 eine extrudierte, doppelseitige Hülse 25 mit einem mittigen Anschlag 26, bevorzugt aus Aluminium, vorgesehen wird, die beim elektromagnetischen Fügen in dem jeweiligen Profil expandiert, siehe hierzu die Darstellung gemäß der Fig. 11 der Zeichnung.

Bei der in Fig. 4 und 5 dargestellten Verbindung wird durch die Steganordnung in der A- Säule 15 ein Expandieren des zusätzlichen Verbindungselementes 13 an bestimmten Umfangsbereichen verhindert, wodurch sich ein Ineinandergreifen von A-Säule 15 und zusätzlichem Verbindungselement 13 ergibt.

Bei einer zweckmäßigen Ausführungsform des erfindungsgemäßen Verfahrens wird der Fahrgestellrahmen 17 derart vorgefertigt, daß das zusätzliche Verbindungselement 13 und ggfs. die A- und/oder B- Säule 15,16 von oben her gesehen angebracht werden können, wobei bevorzugt zunächst das zusätzliche Verbindungselement 13 in den Fahrgestellrahmen 17 eingesetzt wird und danach die A- und/oder B- Säule 15,16 auf das zusätzliche Verbindungselement 13 aufgesetzt wird. Es wird danach, ähnlich wie z.B. in Fig. 9 dargestellt, die eine abweichende Ausführungsform zeigt, auf die später eingegangen wird, das Betätigungselement 21 für das elektromagnetische Fügen in das zusätzliche Verbindungselement 13 zu dessen Expandieren in der A- und/oder B- Säule 15,16 und in dem Fahrgestellrahmen 17 eingeführt. Das Betätigungselement 21 für das elektromagnetische Fügen kann dabei z.B. als Magnetspule ausgebildet sein. Dabei können bei einer Ausführungsform beide Verbindungen, A- und/oder B- Säule 15,16 mit zusätzlichem Verbindungselement 13 bzw. Fahrgestellrahmen 17 mit zusätzlichem Verbindungselement 13, in derselben Bearbeitungsvorrichtung gleichzeitig erzeugt werden. Bei einer anderen Ausführungsform können beide Verbindungen, A- und/oder B- Säule 15,16 mit zusätzlichem Verbindungselement 13 bzw. Fahrgestellrahmen 17 mit zusätzlichem Verbindungselement 13, separat in derselben Bearbeitungsvorrichtung oder in unterschiedlichen Bearbeitungsvorrichtungen erzeugt werden.

Bei der in der Fig. 9 bzw. der Fig. 11 gezeigten Verbindungsstelle wird die A- Säule 15 einer Fahrzeugkarosserie durch mehrstufiges Verbinden an dem in einer Instrumententafel 22 integrierten, dem Fahrzeugaufbau zusätzliche Steifigkeit verleihenden, Querträger 23 eines Fahrzeuges befestigt. Es wird dabei die A- Säule 15 einer Fahrzeugkarosserie zuerst mit der Instrumententafel 22 über ein Klebemittel 24 verbunden, anschließend wird das zusätzliche Verbindungselement 13 durch die A- Säule 15 hindurch in die Instrumententafel 22 eingeführt und dann beim elektromagnetischen Fügen expandiert. Dabei ergibt sich eine saubere und schnelle Verbindung mit einer hohen Steifigkeit ohne die Verwendung von Befestigungsmitteln wie Schrauben od. dgl., die im übrigen auch klapperfrei ist. Bei der Darstellung in Fig. 9 bzw. Fig. 11 ist dazu das Betätigungselement 21 für das elektromagnetische Fügen schematisch dargestellt, das in das zusätzliche Verbindungselement 13 zum elektromagnetischen Fügen einzuführen ist, weiterhin dargestellt ist unterseitig ein Teil eines Profiles 12 des Fahrgestellrahmens 17. Selbstverständlich kann das erfindungsgemäße Verfahren auch zur Verbindung von anderen als dem dargestellten Querträger 23 verwendet werden.

Bei dem erfindungsgemäßen Verfahren ist bevorzugt vorgesehen, daß die einzelnen zu verbindenden Fahrzeugrahmenteile 11 vor dem mehrstufigen Verbinden fertig lackiert werden, d.h. es erübrigt sich nach dem Verbinden eine diesbezügliche Nachbehandlung. Weiterhin ist alternativ oder ergänzend vorgesehen, daß die einzelnen zu verbindenden Fahrzeugrahmenteile 11 vor dem mehrstufigen Verbinden fertig mit Verkleidungselementen versehen werden, so daß sich auch hier nach dem Verbinden eine diesbezügliche Nachbehandlung erübrigt.

Die strukturelle Fügung der einzelnen Fahrzeugrahmenteile 11 durch Verklebung kann dabei z.B. unter Zuführung eines Einkomponenten- Klebemittels erfolgen, alternativ oder ergänzend dazu kann nach einem anderen Ausgestaltungsmerkmal des erfindungsgemäßen Verfahrens aber auch die strukturelle Fügung der einzelnen Fahrzeugrahmenteile 11 durch Verklebung unter Zuführung eines Mehrkomponenten- Klebemittels erfolgen.

Mit dem erfindungsgemäßen Verfahren läßt sich, wie oben bereits beschrieben, in besonders vorteilhafter Weise eine Kombination der Verfahrensschritte der Fixierung der zu verbindenden Fahrzeugrahmenteile 11 und des Verfahrensschrittes der strukturellen Fügung der zu verbindenden Fahrzeugrahmenteile 11 durchführen, dadurch das eben die Fixierung durch elektromagnetisches Fügen und die strukturelle Fügung insb. durch eine Verklebung erfolgt. Das erfindungsgemäße Verfahren läßt sich dabei besonders gut für die Verbindung von vorgefertigten Fahrzeugrahmenteilen 11 zum Aufbau von Fahrzeugtragrahmenanordnungen 10 einsetzen.

Es sei ausdrücklich darauf hingewiesen, daß das erfindungsgemäße Verfahren keineswegs auf die dargestellten bzw. beschriebenen Anwendungsfälle beschränkt ist, es lassen sich vielmehr alle möglichen z.B. Al.- Extrusionsprofile einer Fahrzeugkarosserie über mehrstufiges Verbinden miteinander verbinden. Dabei kann das Design gemäß den Anforderungen der für die einzelnen Verbindungspunkte spezifischen Kräfte und Momente modifiziert werden. Weiterhin ist vorgesehen, andere Materialien für die Profile 12 zu verwenden wie z.B. hochfeste Stähle oder Legierungen. Man wird dabei allerdings das zusätzliche Verbindungselement 13 aus Aluminium bestehend wegen der guten Leitfähigkeit beibehalten.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann das erfindungsgemäße Verfahren zur Verbindung von Fahrzeugkarosserieteilen beliebiger Art verwendet werden, insb. auch zum Aufbau von abweichenden Arten von Fahrzeugen. Weiterhin vorgesehen sind Abwandlungen bei der Durchführung des Verfahrens, und zwar insb. bzgl. des Ei nbringens des Betätigungselementes 21 für das elektromagnetische Fügen, bzgl. der Ausbildung der Verbindung selber und bezüglich der Einbringung des Materials für das strukturelle Fügen, wie z.B. von Klebemittel.

### BEZUGSZEICHENLISTE

- 10: Fahrzeugtragrahmenanordnung
- 11: Fahrzeugrahmenteil
- 12: extrudiertes Profil
- 13: zusätzliches Verbindungselement
- 14: verankertes Dornelement (in 15,16)
- 15: A- Säule
- 16: B- Säule
- 17: Fahrgestellrahmen
- 18: Ausnehmung (in 17 für 13)
- 19: horizontal verlaufende Wand (in 17)
- 20: extrudierte Hülse
- 21: Betätigungselement für elektromagnetisches Fügen
- 22: Instrumententafel
- 23: Querträger (in 22)
- 24: Klebemittel
- 25: doppelseitige Hülse
- 26: mittiger Anschlag (von 25)

## Patentansprüche

1. Verfahren zum Verbinden zweier Fahrzeugrahmenteile (11) für Fahrzeuge aller Art, insb. für Kraftfahrzeuge, wobei die Fahrzeugrahmenteile (11) vorzugsweise zum Aufbau einer Fahrzeugtragrahmenanordnung (10) mit wesentlichen Bestandteilen aus Profilen (12) ausgebildet sind, wobei das Verbinden der einzelnen Fahrzeugrahmenteile (11) mehrstufig erfolgt, derart, daß in einem Verfahrensschritt eine Fixierung der zu verbindenden Fahrzeugrahmenteile (11) zueinander erfolgt und daß in einem weiteren Verfahrensschritt eine strukturelle Fügung der zu verbindenden Fahrzeugrahmenteile (11) erfolgt,
**dadurch gekennzeichnet, daß**
das Verbinden der einzelnen Fahrzeugrahmenteile (11) in der Weise mehrstufig erfolgt, daß in einem Verfahrensschritt eine Fixierung der zu verbindenden Fahrzeugrahmenteile (11) zueinander durch elektromagnetisches Fügen erfolgt und in einem weiteren Verfahrensschritt eine strukturelle Fügung der einzelnen zu verbindenden Fahrzeugrahmenteile (11) erfolgt.

2. Verfahren nach Anspruch 1,
**dadurch gekennzeichnet, daß**
das Verbinden der einzelnen Fahrzeugrahmenteile (11) in der Weise mehrstufig erfolgt, daß in einem Verfahrensschritt eine Fixierung der zu verbindenden Fahrzeugrahmenteile (11) zueinander durch elektromagnetisches Fügen erfolgt und in einem weiteren Verfahrensschritt eine strukturelle Fügung der einzelnen zu verbindenden Fahrzeugrahmenteile (11) durch eine Verklebung erfolgt.

3. Verfahren nach Anspruch 1 oder 2,
**dadurch gekennzeichnet, daß**
das Verbinden der einzelnen Fahrzeugrahmenteile (11) in der Weise mehrstufig erfolgt, daß in einem Verfahrensschritt eine Fixierung der zu verbindenden Fahrzeugrahmenteile (11) zueinander durch elektromagnetisches Fügen erfolgt und in einem weiteren Verfahrensschritt eine strukturelle Fügung der einzelnen zu verbindenden Fahrzeugrahmenteile (11) durch eine Verschweißung erfolgt.

4. Verfahren nach einem der Ansprüche 1 bis 3,
**dadurch gekennzeichnet, daß**
das Verbinden der einzelnen Fahrzeugrahmenteile (11) in der Weise mehrstufig erfolgt, daß in einem Verfahrensschritt eine Fixierung der zu verbindenden Fahrzeugrahmenteile (11) zueinander durch elektromagnetisches Fügen erfolgt und in einem weiteren Verfahrensschritt eine strukturelle Fügung der einzelnen zu verbindenden Fahrzeugrahmenteile (11) durch eine Vernietung erfolgt.

5. Verfahren nach einem der Ansprüche 1 bis 4,
**dadurch gekennzeichnet, daß**
das Verbinden der einzelnen Fahrzeugrahmenteile (11) in der Weise mehrstufig erfolgt, daß in einem Verfahrensschritt eine Fixierung der zu verbindenden Fahrzeugrahmenteile (11) zueinander durch elektromagnetisches Fügen erfolgt und in einem weiteren Verfahrensschritt eine strukturelle Fügung der einzelnen zu verbindenden Fahrzeugrahmenteile (11) durch eine Verschraubung erfolgt.

6. Verfahren nach einem der Ansprüche 1 bis 5,
**dadurch gekennzeichnet, daß**
das Verbinden der einzelnen Fahrzeugrahmenteile (11) in der Weise mehrstufig erfolgt, daß in einem Verfahrensschritt eine Fixierung der zu verbindenden Fahrzeugrahmenteile (11) zueinander durch elektromagnetisches Fügen erfolgt und in einem weiteren Verfahrensschritt eine strukturelle Fügung der einzelnen zu verbindenden Fahrzeugrahmenteile (11) durch eine Verrastung erfolgt.

7. Verfahren nach einem der Ansprüche 1 bis 6,
**dadurch gekennzeichnet, daß**
das Verbinden der einzelnen Fahrzeugrahmenteile (11) in der Weise mehrstufig erfolgt, daß in einem Verfahrensschritt eine Fixierung der zu verbindenden Fahrzeugrahmenteile (11) zueinander durch elektromagnetisches Fügen erfolgt und in einem weiteren Verfahrensschritt eine strukturelle Fügung der einzelnen zu verbindenden Fahrzeugrahmenteile (11) durch eine Verklemmung erfolgt.

8. Verfahren nach einem der Ansprüche 1 bis 7,
**dadurch gekennzeichnet, daß**
das Verbinden der einzelnen Fahrzeugrahmenteile (11) in der Weise mehrstufig erfolgt, daß in einem Verfahrensschritt eine Fixierung der zu verbindenden Fahrzeugrahmenteile (11) zueinander durch elektromagnetisches Fügen erfolgt und in einem weiteren Verfahrensschritt eine strukturelle Fügung der einzelnen zu verbindenden Fahrzeugrahmenteile (11) durch eine Clinschung erfolgt.

9. Verfahren nach einem der Ansprüche 1 bis 8,
**dadurch gekennzeichnet, daß**
das Verbinden der einzelnen Fahrzeugrahmenteile (11) in der Weise mehrstufig erfolgt, daß eine Fixierung der zu verbindenden Fahrzeugrahmenteile (11) zueinander durch elektromagnetisches Fügen vor dem strukturellen Fügen der zu verbindenden Fahrzeugrahmenteile (11) erfolgt.

10. Verfahren nach einem der Ansprüche 1 bis 8,
**dadurch gekennzeichnet, daß**
das Verbinden der einzelnen Fahrzeugrahmenteile (11) in der Weise mehrstufig erfolgt, daß der Verfahrensschritt des strukturellen Fügens der zu verbindenden Fahrzeugrahmenteile (11) bereits vor der Fixierung der zu verbindenden Fahrzeugrahmenteile (11) durch elektromagnetisches Fügen erfolgt.

11. Verfahren nach einem der Ansprüche 1 bis 10,
**dadurch gekennzeichnet, daß**
die einzelnen Fahrzeugrahmenteile (11) vor ihrem mehrstufigen Verbinden bereits teilweise oder vollständig bearbeitet und/oder ausgerüstet werden.

12. Verfahren nach einem der Ansprüche 1 bis 11,
**dadurch gekennzeichnet, daß**
durch das mehrstufige Verbinden eine Verbindung der einzelnen Fahrzeugrahmenteile (11) aus extrudierten Aluminium- Profilen (12) erzeugt wird.

13. Verfahren nach einem der Ansprüche 1 bis 12,
**dadurch gekennzeichnet, daß**
die mehrstufige Verbindung der einzelnen Fahrzeugrahmenteile (11) unter Verwendung eines zusätzlichen, beim elektromagnetischen Fügen expandierenden Verbindungselementes (13) erfolgt.

14. Verfahren nach Anspruch 13,
**dadurch gekennzeichnet, daß**
die mehrstufige Verbindung der einzelnen Fahrzeugrahmenteile (11) unter Verwendung eines als verankertes Dornelement (14) ausgebildeten, beim elektrormagnetischen Fügen expandierenden zusätzlichen Verbindungselementes (13) erfolgt.

15. Verfahren nach einem der Ansprüche 1 bis 14,
**dadurch gekennzeichnet, daß**
die A- und/oder B- Säule (15,16) einer Fahrzeugkarosserie durch mehrstufiges Verbinden an dem Fahrgestellrahmen (17) des Fahrzeuges befestigt wird.

16. Verfahren nach Anspruch 15,
**dadurch gekennzeichnet, daß**
das zusätzliche Verbindungselement (13) beim elektromagnetischen Fügen sowohl in der A- und/oder B- Säule (15,16) als auch in dem Fahrgestellrahmen (17) expandiert.

17. Verfahren nach Anspruch 16,
**dadurch gekennzeichnet, daß**
das Expandieren des zusätzlichen Verbindungselementes (13) beim elektromagnetischen Fügen sowohl in der A- und/oder B- Säule als auch in dem Fahrgestellrahmen (17) sequentiell erfolgt.

18. Verfahren nach Anspruch 16,
**dadurch gekennzeichnet, daß**
das Expandieren des zusätzlichen Verbindungselementes (13) beim elektromagnetischen Fügen sowohl in der A- und/oder B- Säule als auch in dem Fahrgestellrahmen (17) gleichzeitig erfolgt.

19. Verfahren nach einem der Ansprüche 15 bis 18,
**dadurch gekennzeichnet, daß**
die A- und/oder B- Säule (15/16) mit einem solchen Querschnitt versehen wird, der zur leichten Aufnahme des zusätzlichen Verbindungselementes (13) vor dem Expandieren beim elektromagnetischen Fügen geeignet ist.

20. Verfahren nach einem der Ansprüche 15 bis 19,
**dadurch gekennzeichnet, daß**
der Fahrgestellrahmen (17) im Verbindungsbereich mit wenigstens einer Ausnehmung (18) versehen wird, die zur Aufnahme des zusätzlichen Verbindungselementes (13) vor dem Expandieren beim elektromagnetischen Fügen geeignet ist.

21. Verfahren nach einem der Ansprüche 15 bis 20,
**dadurch gekennzeichnet, daß**
der Fahrgestellrahmen (17) im wesentlichen im Verbindungsbereich mit einer Anzahl im wesentlichen horizontal verlaufender Wände (19) versehen wird, so daß die Verbindung eine hohe Festigkeit erhält.

22. Verfahren nach einem der Ansprüche 15 bis 21,
**dadurch gekennzeichnet, daß**
das zusätzliche Verbindungselement (13) vor dem elektromagnetischen Fügen zusammen mit der A- und/oder B- Säule (15,16) in den Fahrgestellrahmen (17) eingesetzt wird.

23. Verfahren nach einem der Ansprüche 15 bis 21,
**dadurch gekennzeichnet, daß**
die A- und/oder B- Säule (15,16) zuerst mit einem Klebemittel (24) versehen wird, anschließend in dem Fahrgestellrahmen (17) positioniert wird und danach das zusätzliche Verbindungselement (13) sowohl in der A- und/oder B- Säule (15,16) als auch in dem Fahrgestellrahmen (17) expandiert.

24. Verfahren nach einem der Ansprüche 13 bis 23,
**dadurch gekennzeichnet, daß**
als zusätzliches Verbindungselement (13) eine extrudierte Hülse (20), bevorzugt aus Aluminium, vorgesehen wird, die beim elektromagnetischen Fügen in dem jeweiligen Profil expandiert.

25. Verfahren nach einem der Ansprüche 13 bis 23,
**dadurch gekennzeichnet, daß**
als zusätzliches Verbindungselement (13) eine extrudierte, doppelseitige Hülse (25) mit einem mittigen Anschlag (26), bevorzugt aus Aluminium, vorgesehen wird, die beim elektromagnetischen Fügen in dem jeweiligen Profil expandiert.

26. Verfahren nach einem der Ansprüche 13 bis 25,
**dadurch gekennzeichnet, daß**
durch die Steganordnung in der A- und/oder B- Säule (15,16) ein Expandieren des zusätzlichen Verbindungselementes (13) an bestimmten Umfangsbereichen verhindert wird, wodurch sich ein Ineinandergreifen von A - und/oder B- Säule (15,16) und zusätzlichem Verbindungselement (13) ergibt.

27. Verfahren nach einem der Ansprüche 15 bis 26,
**dadurch gekennzeichnet, daß**
der Fahrgestellrahmen (17) derart vorgefertigt wird, daß das zusätzliche Verbindungselement (13) und ggfs. die A- und/oder B- Säule (15,16) von oben her gesehen angebracht werden können, wobei bevorzugt zunächst das zusätzliche Verbindungselement (13) in den Fahrgestellrahmen (17) eingesetzt wird und danach die A- und/oder B- Säule (15,16) auf das zusätzliche Verbindungselement (13) aufgesetzt wird.

28. Verfahren nach einem der Ansprüche 15 bis 27,
**dadurch gekennzeichnet, daß**
das Betätigungselement (21) für das elektromagnetische Fügen in das zusätzliche Verbindungselement (13) zu dessen Expandieren in der A- und/oder B- Säule (15,16) und in dem Fahrgestellrahmen (17) eingeführt wird.

29. Verfahren nach Anspruch 28,
**dadurch gekennzeichnet, daß**
beide Verbindungen, A- und/oder B- Säule (15,16) mit zusätzlichem Verbindungselement (13) bzw. Fahrgestellrahmen (17) mit zusätzlichem Verbindungselement (13), in derselben Bearbeitungsvorrichtung gleichzeitig erzeugt werden.

30. Verfahren nach Anspruch 28,
**dadurch gekennzeichnet, daß**
beide Verbindungen, A- und/oder B- Säule (15,16) mit zusätzlichem Verbindungselement (13) bzw. Fahrgestellrahmen (17) mit zusätzlichem Verbindungselement (13), separat in derselben Bearbeitungsvorrichtung oder in unterschiedlichen Bearbeitungsvorrichtungen erzeugt werden.

31. Verfahren nach einem der vorhergehenden Ansprüche,
**dadurch gekennzeichnet, daß**
die A- Säule (15) einer Fahrzeugkarosserie durch mehrstufiges Verbinden an dem in einer Instrumententafel (22) integrierten Querträger (23) eines Fahrzeuges befestigt wird.

32. Verfahren nach Anspruch 31,
**dadurch gekennzeichnet, daß**
die A- Säule (15) einer Fahrzeugkarosserie zuerst mit der Instrumententafel (22) über ein Klebemittel (24) verbunden wird und anschließend das zusätzliche Verbindungselement (13) durch die A- Säule (15) hindurch in die Instrumententafel (22) eingeführt und dann beim elektromagnetischen Fügen expandiert wird.

33. Verfahren nach einem der vorhergehenden Ansprüche,
**dadurch gekennzeichnet, daß**
die einzelnen zu verbindenden Fahrzeugrahmenteile (11) vor dem mehrstufigen Verbinden fertig lackiert werden.

34. Verfahren nach einem der vorhergehenden Ansprüche,
**dadurch gekennzeichnet, daß**
die einzelnen zu verbindenden Fahrzeugrahmenteile (11) vor dem mehrstufigen Verbinden fertig mit Verkleidungselementen versehen werden.

35. Verfahren nach einem der vorhergehenden Ansprüche,
**dadurch gekennzeichnet, daß**
das strukturelle Fügen der einzelnen Fahrzeugrahmenteile (11) durch Verklebung unter Zuführung eines Einkomponenten- Klebemittels erfolgt.

36. Verfahren nach einem der vorhergehenden Ansprüche,
**dadurch gekennzeichnet, daß**
das strukturelle Fügen der einzelnen Fahrzeugrahmenteile (11) durch Verklebung unter Zuführung eines Mehrkomponenten- Klebemittels erfolgt.
